Europäisches Patentamt

European Patent Office

Office européen des brevets

(19)

(11) Veröffentlichungsnummer: **0 534 244 A1**

## (12) EUROPÄISCHE PATENTANMELDUNG

(21) Anmeldenummer: **92115543.8**

(22) Anmeldetag: **11.09.92**

(51) Int. Cl.5: **C08L 51/08**, C08L 51/04

(30) Priorität: **26.09.91 DE 4131985**

(43) Veröffentlichungstag der Anmeldung:
**31.03.93 Patentblatt 93/13**

(84) Benannte Vertragsstaaten:
**BE DE ES FR GB IT NL**

(71) Anmelder: **BASF Aktiengesellschaft
Carl-Bosch-Strasse 38
W-6700 Ludwigshafen(DE)**

(72) Erfinder: **Niessner, Norbert, Dr.
Buhl'scher Hof 10
W-6701 Friedelsheim(DE)**
Erfinder: **Seitz, Friedrich, Dr.
Von-Wieser-Strasse 1
W-6701 Friedelsheim(DE)**

(54) **Thermoplastische Formmassen.**

(57) Thermoplastische Formmasse aus - bezogen auf die Summe aus A, B und C -

A: 5 bis 90 Gew.-% eines ersten Pfropfcopolymerisats A, das gebildet wird aus, bezogen auf A,

A1: 10 bis 70 Gew.-% einer Pfropfhülle aus mindestens 50 Gew.-% einer Vinylverbindung (außer Acrylnitril) und bis zu 50 Gew.-% Acrylnitril und

A2: 30 bis 90 Gew.-% eines teilchenförmigen Siliconkautschuks als Pfropfkern, der einen mittleren Teilchendurchmesser ($d_{50}$) von 50 bis 500 nm aufweist, und

B: 5 bis 90 Gew.-% eines zweiten Pfropfcopolymerisats B, das gebildet wird aus, bezogen auf B,

B1: 5 bis 75 Gew.-% einer Pfropfhülle aus mindestens 50 Gew.-% einer Vinylverbindung (außer Acrylnitril) und bis zu 50 Gew.-% Acrylnitril und

B2: 25 bis 95 Gew.-% eines teilchenförmigen Acrylatkautschuks als Pfropfgrundlage, der einen mittleren Teilchendurchmesser ($d_{50}$) von 50 bis 150 nm aufweist und

C: 5 bis 90 Gew.-% eines dritten Pfropfcopolymerisats, das gebildet wird aus, bezogen auf C,

C1: 5 bis 75 Gew.-% einer Pfropfhülle aus mindestens 50 Gew.-% einer Vinylverbindung (außer Acrylnitril) und bis zu 50 Gew.-% Acrylnitril und

C2: 25 bis 95 Gew.-% eines teilchenförmigen Acrylatkautschuks als Pfropfgrundlage, der einen mittleren Teilchendurchmesser ($d_{50}$) von 200 bis 600 nm aufweist.

ASA und ABS-Blends sind bei Raumtemperatur schlagzäh; die Zähigkeit nimmt aber mit sinkender Temperatur schnell ab und unter 0°C verhalten sich die Werkstoffe ausgesprochen spröde.

Silikonkautschuke haben diese Nachteile nicht.

Thermoplastische Werkstoffe sind daher schon mit Silikonkautschuk modifiziert worden. Im allgemeinen muß dazu der Silikonkautschuk gepfropft werden, um die Phasenanbindung an den thermoplastischen Werkstoff zu gewährleisten (niederl. Patentveröffentl. 131 748, US-PS 3 694 478, belg. PS-816/210, DE-PSen 25 39 572, 27 17 192, 36 29 763, 38 36 900, 37 25 576, europ. Patentveröffentl. 307 916, 324 369, 369 245, 370 344, 370 345, 370 346, 370 347; 249 964, 260 559.

Mit Silikonkautschuk modifizierte Kautschuke zur Schlagzähverbesserung sind auch schon mehr als 2-schalig aufgebaut worden: In EP 260 558 und DE 38 01 537 werden Pfropfcopolymere aus einem vernetzten Silikonkautschukkern, einer ersten Hülle aus vernetztem Alkylacrylat-Kautschuk und einer zweiten Hülle aus z.B. SAN beschrieben.

EP 326 038 beschreibt ein Kautschuksystem aus Acrylat, das mit einem Silikonkautschuk verbunden und mit einem Vinylmonomeren gepfropft ist.

Schließlich beschreiben die europ. Patentveröffentlichungen 369 200, 369 201, 369 202, 369 203, 369 205 mehrstufige Polyorganosiloxan/Polyvinyl-Pfropfcopolymere, hergestellt durch simultane Co/Homopolymerisation mindestens eines Siloxans und mindestens eines vinylgruppenhaltigen Comonomeren, z.B. Styrol und/oder Acrylnitril. Abmischungen von Thermoplasten wie Polyester, Polycarbonate, Polyphenylenether etc. mit diesen Mehrstufen-Pfropfcopolymerisaten weisen gute Zähigkeit, thermische Stabilität und keine Tendenz zur Delamination auf.

Silikonkautschuk ist jedoch teuer. Die beschriebenen Silikonkautschuk-Systeme haben den Nachteil, daß erhebliche Mengen an Silikon zur Schlagzähmodifizierung benötigt werden.

Es ist daher wünschenswert, einen witterungsstabilen Kautschuk, z.B. einen Acrylatkautschuk so zu modifizieren, daß bereits mit geringen Anteilen einer teuren Silikonkautschukkomponente ein gutes Zähigkeitsniveau bei tiefer Temperatur erhalten wird.

EP 370 344 beschreibt solche Mischungen aus Silikon- und Acrylatkautschuk, zusammen mit EPDM-Kautschuken, wobei die beschriebenen Kautschuke gepfropft sind mit einem oder mehreren harzbildenden Monomeren (z.B. Styrol und Acrylnitril), also ggf. Pfropfcopolymerisate sind.

Mischungen von Pfropfcopolymerisaten auf Basis von Silikonkautschuken und EPDM-Kautschuken sind in EP 370 345 und solche auf Basis von Silikon- und Acrylatkautschuken sind in EP 370 346 beschrieben. Die hier beschriebenen Mischungen weisen eine befriedigende Kältezähigkeit auf; es werden jedoch immer noch erhebliche Mengen an Silikonkautschuk benötigt, um in der Kälte ein akzeptables Zähigkeitsniveau zu erreichen. Außerdem ist die Zähigkeit von der Verarbeitungstemperatur (Spritztemperatur) immer dann stark abhängig, wenn die Acrylatkautschukkomponente monomodal verteilt ist, d.h. nur entweder als kleinteiliges oder als grobteiliges Emulsionspolymerisat vorliegt. Besitzt sie einen mittleren Teilchendurchmesser, so ist zwar die Abhängigkeit von der Kerbschlagzähigkeit von der Verarbeitungstemperatur verringert, es verschlechtert sich jedoch auch drastisch die Einfärbbarkeit.

Es wurde nun gefunden, daß sowohl das Zähigkeitsniveau bei Raumtemperatur und bei tiefer Temperatur erhöht, als auch die Abhängigkeit der Kerbschlagzähigkeit von der Verarbeitungstemperatur (= Spritztemperatur), verbunden mit einer guten Einfärbbarkeit, deutlich erniedrigt ist, wenn "bimodal verteilter", d.h. klein- und grobteiliger Acrylatkautschuk einerseits und Silikonkautschuk andererseits eingesetzt wird. Zusätzlich ist durch Verwendung dieser Mischungen die multiaxiale Zähigkeit der Abmischungen deutlich besser als die der Einzelkomponenten, und zwar sowohl bei Raumtemperatur als auch bei 0°C. Weiterhin sind solche Mischungen besser entformbar, was sich in einem erhöhten Oberflächenglanz im Vergleich zu Mischungen mit Silikonkautschuken, Acrylatkautschukpartikel einheitlicher Größe und eines thermoplastischen spröden Harzes äußert.

Unmittelbarer Erfindungsgegenstand ist eine thermoplastische Formmasse aus - bezogen auf die Summe aus A, B und C -

A:  5 bis 90 Gew.-% eines ersten Pfropfcopolymerisats A, das gebildet wird aus, bezogen auf A,

A1:  10 bis 70 Gew.-% einer Pfropfhülle aus mindestens 50 Gew.-% einer Vinylverbindung (außer Acrylnitril)und bis zu 50 Gew.-% Acrylnitril und

A2:  30 bis 90 Gew.-% eines teilchenförmigen Silikonkautschuks als Pfropfkern, der einen mittleren Teilchendurchmesser ($d_{50}$) von 50 bis 500 nm aufweist, und

B:  5 bis 90 Gew.-%, bevorzugt 20 bis 80 Gew.-% eines zweiten Pfropfcopolymerisats B, das gebildet wird aus, bezogen auf B,

B1:  5 bis 75 Gew.-% einer Pfropfhülle aus mindestens 50 Gew.-% einer Vinylverbindung (außer Acrylnitril) und bis zu 50 Gew.-% Acrylnitril und

B2:  25 bis 95 Gew.-% eines teilchenförmigen Acrylatkautschuks als Pfropfgrundlage, der einen

2

mittleren Teilchendurchmesser ($d_{50}$) von 50 bis 150 nm aufweist und

C: 5 bis 90 Gew.-% eines dritten Pfropfcopolymerisats, das gebildet wird aus, bezogen auf C,

C1: 5 bis 75 Gew.-% einer Pfropfhülle aus mindestens 50 Gew.-% einer Vinylverbindung (außer Acrylnitril) und bis zu 50 Gew.-% Acrylnitril und

C2: 25 bis 95 Gew.-% eines teilchenförmigen Acrylatkautschuks als Pfropfgrundlage, der einen mittleren Teilchendurchmesser ($d_{50}$) von 200 bis 600 nm aufweist.

Bevorzugt enthalten die erfindungsgemäßen Formmassen die Bestandteile A, B in einem Anteil von jeweils 10 bis 60 und besonders bevorzugt in einem Anteil von 10 bis 40 bzw. 20 bis 60 bzw. 10 bis 30 Gew.-%.

Die Mengenverhältnisse von Pfropfhülle zu Pfropfkern (A1/A2; B1/B2; C1/C2) sind bevorzugt 20 bis 60 zu 40 bis 80 bzw. 20 bis 70 zu 30 bis 80 bzw. 20 bis 70 zu 30 bis 80.

Die zur Erzeugung der erfindungsgemäßen Formmassen verwendbaren Pfropfprodukte auf Basis von Silikonkautschuk werden erhalten, indem Vinylverbindungen oder deren Gemische in Gegenwart von Silikonkautschuk, insbesondere in Gegenwart von in Emulsionsform vorliegendem Silikonkautschuk radikalisch polymerisiert werden, wobei zumindest ein Teil der Monomeren auf den Kautschuk aufgepfropft wird. Geeignete Vinylverbindungen sind beispielsweise vinylaromatische Verbindungen, d.h. Styrol, kern- oder seitenkettensubstituierte Styrole, insbesondere p-Methylstyrol und $\alpha$-Methylstyrol, halogensubstituierte Styrole, z.B. Chlor- oder Bromstyrol, Vinylnaphthalin oder mit den Vorgenannten copolymerisierbare sonstige Vinylverbindungen wie Derivate von $\alpha$, $\beta$-ungesättigten Mono- oder Dicarbonsäuren, so insbesondere $C_1$-$C_5$-Alkylester von Acrylsäure oder Methacrylsäure, vorzugsweise Methylmethacrylat, Maleinsäureanhydrid, N-Phenylmaleinimid oder Mischungen daraus.

Bevorzugtes Monomerengemisch ist eine Kombination aus Styrol und/oder $\alpha$-Methylstyrol und Acrylnitril, vorzugsweise im Gewichtsverhältnis ($\alpha$-Methyl)Styrol: Acrylnitril = 1:1 bis 10:1.

Geeignete Silikonkautschuke sind beispielsweise die in der DE-OS 3 629 763 beschriebenen Verbindungen. Auf die genannte Offenlegungsschrift wird anstelle einer ausführlichen Beschreibung verwiesen.

Weitere geeignete Silikonkautschuke haben Kern/Mantel-Aufbau: Beispiele sind teilchenförmige Silikonkautschuke, die von einer Schale aus vernetztem Acrylatkautschuk umhüllt sind (vgl. DE-OS 3 617 267), oder teilchenförmige Silikonkautschuke, die einen Kern aus vernetztem Acrylatkautschuk (vgl. DE-OS 3 720 475) oder aus einem Styrol/Acrylnitril-Copolymerisat (vgl. DE-OS 3 720 478) enthalten. Bevorzugt werden die Pfropfprodukte auf Basis von Silikonkautschuken durch Emulsionspolymerisation hergestellt, wobei in Emulsionsform vorliegende, zumindest teilweise vernetzte Silikonkautschuke als Pfropfgrundlage eingesetzt werden.

Derartige Pfropfpolymerisationen sind bekannt, vorzugsweise werden sie bei Temperaturen zwischen 30 und 100°C unter Verwendung radikalischer Initiatoren durchgeführt, wie organischer oder anorganischer Peroxide, anorganischer Persulfate, z.B. Kaliumpersulfat, Azoinitiatoren, z.B. Azobisisobutyronitril, sowie Redoxsystemen, die aus einem Oxidationsmittel, vorzugsweise einem Peroxid, und einem Reduktionsmittel bestehen, und ggf. unter Zusatz von wäßriger Emulgatorlösung (z.B. anionische oder nicht ionische Emulgatoren, vorzugsweise Natrium-, Kalium- oder Ammoniumsalze langkettiger Carbonsäuren mit 10 bis 20 C-Atomen, z.B. Kaliumoleat, Alkylsulfate mit 10 bis 20 C-Atomen, Alkylsulfonate mit 10 bis 20 C-Atomen oder Alkali- bzw. Ammoniumsalze der disproportionierten Abietinsäure). Die Polymerisation kann diskontinuierlich oder kontinuierlich geführt werden; auch Monomerenzulauf ist möglich.

Außer durch Emulsionspolymerisation ist die Herstellung der Pfropfprodukte prinzipiell jedoch auch durch Suspensions-, Lösungs- oder Massenpolymerisation sowie Kombinationen dieser Verfahren möglich.

Die Pfropfprodukte auf Basis von Silikonkautschuken weisen einen Kautschukgehalt von 30 bis 90 Gew.-%, vorzugsweise von 40 bis 80 Gew.-%, auf. Die mittleren Teilchendurchmesser ($d_{50}$-Werte) der Silikonkautschuke sind 0,10 bis 0,50 $\mu$m, vorzugsweise 0,10 bis 0,15 $\mu$m und 0,25 bis 0,50 $\mu$m.

Die Komponenten (B) und (C) der erfindungsgemäßen Mischungen werden durch Pfropfmischpolymerisation geeigneter Vinylmonomerer (vgl. oben) auf ein vernetztes, kautschukartiges Acrylsäureester-Polymerisat hergestellt. Da bei der Pfropfmischpolymerisation keine 100 %ige Pfropfausbeute erzielbar ist, erhält das Polymerisationsprodukt der Pfropfmischpolymerisation stets einen Anteil an freiem, nicht gepfropftem Styrol/Acrylnitril-Copolymerisat. Unter Pfropfmischpolymerisat im Sinne dieser Erfindung wird jedoch nur der mit Styrol und Acrylnitril tatsächlich gepfropfte Kautschuk bezeichnet. Der Anteil des Pfropfmischpolymerisats in dem Polymerisationsprodukt der Pfropfmischpolymerisation läßt sich in bekannter Weise durch Extraktion des freien, nicht gepfropften Copolymerisats aus dem Polymerisationsprodukt, z.B. im Falle von Polystyrol-acrylnitril mittels Methylethylketon ermitteln, da die Pfropfgrundlage des Pfropfmischpolymerisats vernetzt und das Pfropfmischpolymerisat somit unlöslich ist. Die Prinzipien des Trennverfahrens wurden schon von Moore, Moyer und Frazer, Appl. Polymer Symposia No. 7, Seite 67 ff (1968) beschrieben.

Unter Pfropfgrad wird im Rahmen dieser Erfindung der prozentuale Anteil des in den Pfropfästen des Pfropfmischpolymerisats chemisch gebundenen Styrols und Acrylnitrils, bezogen auf das gesamte Pfropfmischpolymerisat, verstanden. Der Pfropfgrad läßt sich leicht aus der analytisch bestimmbaren Zusammensetzung des methylethylketonunlöslichen Gels berechnen.

Bei den erfindungsgemäßen mittleren Teilchengrößen handelt es sich in allen Fällen um das Gewichtsmittel der Teilchengrößen, wie sie mittels einer analytischen Ultrazentrifuge entsprechend der Methode von W. Scholtan und H. Lange, Kolloid-Z. und Z.-Polymere 250 (1972), Seiten 782 bis 796, bestimmt wurden. Die Ultrazentrifugenmessung liefert die integrale Massenverteilung des Teilchendurchmessers einer Probe. Hieraus läßt sich entnehmen, wieviel Gew.-% der Teilchen einen Durchmesser gleich oder kleiner einer bestimmten Größe haben. Der mittlere Teilchendurchmesser, der auch als $d_{50}$-Wert der integralen Massen- verteilung bezeichnet wird, ist dabei als der Teilchendurchmesser definiert, bei dem 50 Gew.-% der Teilchen einen kleineren Durchmesser haben, als der Durchmesser, der dem $d_{50}$-Wert entspricht. Ebenso haben dann 50 Gew.-% der Teilchen einen größeren Durchmesser als der $d_{50}$-Wert. Zur Charakterisierung der Breite der Teilchengrößenverteilung der Kautschukteilchen werden neben dem $d_{50}$-Wert (mittlerer Teilchendurchmesser) die sich aus der integralen Massenverteilung ergebenden $d_{10}$- und $d_{90}$-Werte herangezogen. Der $d_{10}$- bzw. $d_{90}$-Wert der integralen Massenverteilung ist dabei entsprechend dem $d_{50}$- Wert definiert mit dem Unterschied, daß sie auf 10 bis 90 Gew.-% der Teilchen bezogen sind. Der Quotient

$$\frac{d_{90}-d_{10}}{d_{50}} = Q$$

stellt ein Maß für die Verteilungsbreite der Teilchengröße dar.

Die Herstellung der erfindungsgemäß einzustetzenden beiden Pfropfmischpolymerisate, Komponenten (B) und (C), erfolgt nach dem an sich bekannten Methoden in gebräuchlicher Art und Weise. Als Pfropfgrundlage (B1) und (C1) dienen den beiden Pfropfmischpolymerisaten (B) und (C) vernetzte Acrylsäureester-Polymerisate mit einer Glasübergangstemperatur unterhalb 0°C. Die vernetzten Acrylsäureester-Polymerisate sollen vorzugsweise eine Glastemperatur unter -20°C, insbesondere unter -30°C besitzen. Die Ermittlung der Glasübergangstemperatur der Acrylsäureester-Polymerisate kann z.B. nach der DSC-Methode (K.H. Illers, Makromol. Chemie 127 (1969), S. 1, erfolgen. Für die Herstellung der Acrylsäureester-Polymerisate kommen insbesondere die Acrylsäurealkylester mit 2 bis 8 Kohlenstoffatomen, vorzugsweise mit 4 bis 8 Kohlenstoffatomen, im Alkylrest in Betracht. Als Acrylsäurealkylester, die zur Herstellung der Acrylsäureester-Polymerisate geeignet sind, seien besonders Acrylsäure-n-butylester und Acrylsäureethylhexylester genannt. Die Acrylsäureester können bei der Herstellung der als Pfropfgrundlage dienenden Acrylsäureester-Polymerisate allein oder auch in Mischung miteinander eingesetzt werden.

Um vernetzte Acrylsäureester-Polymerisate zur erhalten, wie sie als Pfropfgrundlage (B1) und (C1) für die Herstellung der Pfropfmischpolymerisate (B) und (C) eingesetzt werden sollen, wird vorzugsweise die Polymerisation der Acrylsäureester in Gegenwart von 0,5 bis 10 Gew.-%, vorzugsweise 1 bis 5 Gew.-%, bezogen auf die bei der Herstellung der Pfropfgrundlagen eingesetzten gesamten Monomeren, eines copolymerisierbaren, mehrfunktionellen, vorzugsweise bifunktionellen, die Vernetzung bewirkenden Monomeren durchgeführt. Als solche bi- oder mehrfrunktionellen Vernetzungs-Monomeren eignen sich Monomere, die vorzugsweise zwei, gegebenenfalls auch mehr, zur Copolymerisation befähigte ethylenische Doppelbindungen enthalten, die nicht in den 1,3-Stellungen konjugiert sind. Geeignete Vernetzungs-Monomere sind beispielsweise Divinylbenzol, Diallylmaleat, Diallylfumarat oder Diallylphthalat. Als besonders günstiges Vernetzungs-Monomeres hat sich der Acrylsäureester des Tricyklodecenylalkohols erwiesen (vgl. DE-PS 1 260 135).

Die Herstellung des erfindungsgemäß einzusetzenden Pfropfmischpolymerisats (B) kann beispielsweise nach der in der DE-PS 1 206 135 beschriebenen Methode erfolgen. Hierzu wird zunächst die Pfropfgrundlage B1 hergestellt, indem der oder die Acrylsäureester und das mehrfunktionelle, die Vernetzung bestehende Monomere, gegebenenfalls zusammen mit den weiteren Comonomeren, in wäßriger Emulsion in an und für sich bekannter Weise bei Temperaturen zwischen 20 und 100°C, vorzugsweise zwischen 50 und 80°C, polymerisiert werden. Es können die üblichen Emulgatoren, wie z.B. Alkalisalze von Alkyl- oder Alkylarylsulfonsäuren, Alkylsulfate, Fettalkoholsulfonate, Salze höherer Fettsäuren mit 10 bis 30 Kohlenstoffatomen oder Harzseifen, verwendet werden. Vorzugsweise nimmt man die Natriumsalze von Alkylsulfonaten oder Fettsäuren mit 10 bis 18 Kohlenstoffatomen. Es ist günstig, die Emulgatoren in Mengen von 0,5 bis 5 Gew.- %, insbesondere von 1 bis 2 Gew.-%, bezogen auf die bei der Herstellung der Pfropfgrundlage (B1) eingesetzten Monomeren, einzusetzen. Im allgemeinen wird bei einem Wasser- zu Monomeren-Verhältnis

4

von 2:1 bis 0,7:1 gearbeitet. Als Polymerisationsinitiatoren dienen insbesondere die gebräuchlichen Persulfate, wie z.B. Kaliumpersulfat, es können jedoch auch Redox-Systeme zum Einsatz gelangen. Die Initiatoren werden im allgemeinen in Mengen von 0,1 bis 1 Gew.-%, bezogen auf die bei der Herstellung der Pfropfgrundlage (B1) eingesetzten Monomeren, eingesetzt. Als weitere Polymerisationshilfsstoffe können die üblichen Puffersubstanzen, durch welche pH-Werte von vorzugsweise 6 bis 9 eingestellt werden - z.B. Natriumbicarbonat und Natriumpyrophosphat - sowie 0 bis 3 Gew.-% eines Molekulargewichtsreglers - wie Mercaptane, Terpinole oder dimeres $\alpha$-Methylstyrol - bei der Polymerisation verwendet.

Die genauen Polymerisationsbedingungen, insbesondere Art, Dosierung und Menge des Emulgators, werden innerhalb der oben angegebenen Bereiche im einzelnen so bestimmt, daß der erhaltene Latex des vernetzten Acrylsäureester-Polymerisats einen $d_{50}$-Wert von 50 bis 150 nm, vorzugsweise im Bereich von 80 bis 100 nm besitzt. Die Teilchengrößen-Verteilung des Latex soll dabei vorzugsweise eng sein. Der Quotient Q = $(d_{90}-d_{10})/d_{50}$ soll kleiner als 0,5, vorzugsweise kleiner als 0,35 sein.

Zur Herstellung des Pfropfmischpolymerisats (B) wird dann in einem nächsten Schritt in Gegenwart des Latex des vernetzten Acrylsäureester-Polymerisats ein Monomeren-Gemisch aus z.B. Styrol, $\alpha$-Methylstyrol, Vinyltoluol, p-Methylstyrol, Methylmethacrylat oder Mischungen daraus, insbesondere Styrol oder $\alpha$-Methylstyrol und Acrylnitril polymerisiert, wobei das Gewichtsverhältnis von Styrol und $\alpha$-Methylstyrol zu Acrylnitril in den Monomeren-Gemisch im Bereich von 80:20 bis 65:35, vorzugsweise im Bereich von 75:25 bis 70:30, liegen soll. Es ist vorteilhaft, diese Pfropfmischpolymerisation auf das als Pfropfgrundlage dienende vernetzte Polyacrylsäureester-Polymerisat wieder in wäßriger Emulsion unter den üblichen, oben aufgeführten Bedingungen durchzuführen. Die Pfropfmischpolymerisation kann zweckmäßig im gleichen System erfolgen wie die Emulsionspolymerisation zur Herstellung der Pfropfgrundlage (B1), wobei, falls otwendig, weiterer Emulgator und Initiator zugegeben werden kann. Das aufzupfropfende Monomeren-Gemisch kann dem Reaktionsgemisch auf einmal, absatzweise in mehreren Stufen oder vorzugsweise kontinuierlich während der Polymerisation zugegeben werden. Die Pfropfmischpolymerisation wird so geführt, daß ein Pfropfgrad von 25 bis 45 Gew.-%, vorzugsweise von 30 bis 40 Gew.-%, im Pfropfmischpolymerisat (B) resultiert. Da die Pfropfausbeute bei der Pfropfmischpolymerisation nicht 100%ig ist, muß eine etwas größere Menge des Monomeren-Gemisches bei der Pfropfmischpolymerisation eingesetzt werden, als es dem gewünschten Pfropfgrad entspricht. Die Steuerung der Pfropfausbeute bei der Pfropfmischpolymerisation und somit des Pfropfgrades des fertigen Pfropfmischpolymerisats (B) ist jedem Fachmann geläufig und kann beispielsweise u.a. durch die Dosiergeschwindigkeit der Monomeren oder durch Reglerzugabe erfolgen (Chauvel, Daniel, ACS Polymer Preprints 15 (1974), Seite 329 ff). Bei der Emulsions-Pfropfmischpolymerisation entstehen im allgmeinen etwa 5 bis 15 Gew.-%, bezogen auf das Pfropfmischpolymerisat, an freiem, ungepropftem Copolymerisat. Der Anteil des Pfropfmischpolymerisats (B) in dem bei der Pfropfmischpolymerisation erhaltenen Polymerisationsprodukt wird nach der oben angegebenen Mehtode ermittelt.

Die Komponente (C) der erfindungsgemäßen Mischungen besteht aus einem zweiten Pfropfmischpolymerisat auf einem vernetzten Acrylsäureester-Polymerisat als Pfropfgrundlage. Um Massen mit dem erfindungsgemäß gewünschten Eigenschaftsbild zu erhalten, hat es sich als wesentlich herausgestellt, daß das zweite, großteilige Pfropfmischpolymerisat (C) separat von dem ersten, kleinteiligen Pfropfmischpolymerisat (B) hergestellt werden muß. Versucht man die Mischung aus dem Pfropmischpolymerisaten (B) und (C) dadurch herzustellen, daß man bei der Pfropfmischpolymerisation eine Mischung aus der feinteiligen Pfropfgrundlage (C1) und der großteiligen Pfropfgrundlage (B'') einsetzt, so werden, wie aus den nachfolgenden Versuchen hervorgeht, nicht Produkte mit dem gewünschten Eigenschaftsbild erhalten. Die aufzupfropfenden Monomeren entsprechen dagegen den für A oder B erwähnten.

Als Pfropfgrundlage (C1) bei der Herstellung des zweiten Pfropfmischpolymerisats (C) wird ebenfalls ein vernetztes Acrylsäureester-Polymerisat eingesetzt. Bezüglich der Art der bei der herstellung der Pfropfgrundlage (C2) einzusetzenden Acrylsäureester, der Art und Menge der Vernetzungs-Monomeren sowie der Art und Menge der gegebenenfalls mitzuverwendenden Comonomeren gelten die weiter oben gemachten Ausführungen, auf die hiermit verwiesen sei.

Im Unterschied zu dem vernetzten Acrylsäureester-Polymerisat, das als Pfropfgrundlage (B1) zur Herstellung des Pfropfmischpolymerisats (B) eingesetzt wird, soll das vernetzte Acrylsäureester-Polymerisat, das als Pfropfgrundlage (C1) zur Herstellung des Pfropfmischpolymerisats (C) dient, großteilig sein. Das bei der Herstellung des zweiten Pfropfmischpolymerisats (C) als Pfropfgrundlage (C1) einzusetzende Acrylsäureester-Polymerisat soll einen mittleren Teilchendurchmesser (Gewichtsmittel) im Bereich von 200 bis 600 nm, vorzugsweise im Bereich von 250 bis 400 nm besitzen. Es ist erstrebenswert, wenn dieses großteilige, vernetzte Acrylsäure-Polymerisat (C2) eine enge Teilchengrößenverteilung aufweist, wobei es günstig ist, wenn der Quotient Q = $(d_{90}-d_{10})/d_{50}$ kleiner als 0,3, vorzugsweise als 0,2 ist. Die Herstellung des als Pfropfgrundlage (C2) dienenden großteiligen vernetzten Acrylsäureester-Polymerisats kann nach den bekannten Polymerisationsweisen zur Herstellung großteiliger Dispersionen vorgenommen werden, erfolgt jedoch zweckmäßigerweise nach der Saatlatex-Methode, wie sie in der DE-PS 1 911 882 für die Herstellung von ASA-Polymerisaten beschrieben ist. Nach dieser Methode wird zur Herstellung des vernetzten Acrylsäureester-Polymerisat-Latex mit einem mittleren Teilchendurchmesser in dem oben erwähnten Bereich ein Saatlatex vorgelegt, dessen Teilchendurchmesser vorzugsweise unter 120 nm liegt und der durch übliche Emulsionspolymerisation der Acrylsäureester, der Vernetzungs-Monomeren sowie der gegebenenfalls verwendeten Comonomeren in der für die Herstellung der feinteiligen Pfropfgrundlage (B1) beschriebenen Weise erzeugt worden ist. Die Weiterpolymerisation dieses Saatlatex erfolgt durch Zugabe von weiteren Monomeren und Emulgator.

Dabei werden die Bedingungen in bekannter Weise [s. z.B. Journal of Applied Polymer Science, Vol. 9 (1965), S. 2929 bis 2938] so eingestellt, daß lediglich die vorhandenen Polymerisatpartikeln des Saatlatex weiterwachsen, aber keine neuen Latexteilchen gebildet werden. Die Teilchengröße des resultierenden großteiligen Latex läßt sich durch Variation des Mengenverhältnisses von Saatlatex zu Monomeren in der gewünschten Weise einstellen.

Zur Herstellung des erfindungsgemäßen zweiten Pfropfmischpolymerisats (C) wird in Gegenwart des zuvor hergestellten großteiligen Latex des vernetzten Acrylsäureester-Polymerisats (C1) wiederum ein Monomeren-Gemisch polymerisiert, wobei das Gewichtsverhältnis im Falle von Styrol und Acrylnitril in diesem Monomeren-Gemisch 80:20 bis 65:35 (S:A) betragen soll. Die Pfropfmischpolymerisation wird dabei wie bei der Herstellung des feinteiligen Pfropfmischpolymerisats (B) in Emulsion durchgeführt. Dabei werden die üblichen Polymerisationshilsmittel wie Katalysatoren, Regler und Emulgatoren, und auch die üblichen Polymerisationsbedingungen wie Temperatur u. dgl. angewendet, wie sie bereits weiter oben für die Emulsionspolymerisation beschrieben worden sind. Bei der Pfropfmischpolymerisation zur Herstellung des zweiten Pfropfmischpolymerisats (C) wird das Monomeren-Gemisch in solchen Mengen eingesetzt und werden solche Polymerisationsbedingungen eingestellt, daß ein Pfropmischpolymerisat mit einem Pfropfgrad von 20 bis 40 Gew.-%, vorzugsweise 20 bis 35 Gew.-%, resultiert. Wegen der Einstellung des Pfropfgrades bei der Pfropfmischpolymerisation und der Bestimmung des Anteils des Pfropfmischpolymerisats im Polymerisationsprodukt gelten die für die Herstellung des ersten Pfropfmischpolymerisats (B) gemachten Auführungen entsprechend.

Neben den Pfropfmischpolymerisaten (A), (B) und (C) enthalten die efindungsgemäßen Mischungen als weitere Komponente (D) eine Hartkomponente aus einem oder mehreren Copolymerisaten der o.g. Vinylmonomeren, z.B. von Styrol und/oder α-Methylstyrol mit Acrylnitril. Der Acrylnitril-Gehalt in diesen Copolymerisaten der Hartkomponente (D) muß ggf. 20 bis 40 Gew.-%, bezogen auf das jeweilige Copolymerisat der Hartkomponente, betragen. Zu dieser Hartkomponente (D) zählen auch die bei der Pfropfmischpolymerisation zur Herstellung der Komponenten (A), (B) und (C) entstehenden freien, nicht gepfropften Copolymerisate. Je nach den bei der Pfropfmischpolymerisation für die Herstellung der Pfropmischpolymerisate (A), (B) und (C) gewählten Bedingungen kann es möglich sein, daß bei der Pfropfmischpolymerisation schon ein hinreichender Anteil an Hartkomponente (D) gebildet worden ist. Im allgemeinen wird es jeodch nötig sein, die bei der Pfropfmischpolymerisation erhaltenen Produkte mit zusätzlicher, separat hergestellter Hartkomponente (D) abzumischen.

Bei dieser zusätzlichen, separat hergestellten Hartkomponente (D) kann es sich um ein Styrol/Acrylnitril-Copolymerisat ein α-Methylstyrol/Acrylnitril-Copolymerisat oder ein α-Methylstyrol/Styrol-Acrylnitril-Terpolymerisat handeln. Diese Copolymerisate können einzeln oder auch in Mischung miteinander für die Hartkomponente eingesetzt werden, so daß es sich bei der zusätzlichen, separat hergestellten Hartkomponente (D) der erfindungsgemäßen Mischunge beispielsweise um eine Mischung aus einem Styrol/Acrylnitril-Copolymerisat und einen α-Methylstyrol/Acrylnitril-Copolymerisat handeln kann. In dem Fall, in dem die Hartkomponente (D) der erfindungsgemäßen Massen aus einer Mischung von einem Styrol/Acrylnitril-Copolymerisat und einem α-Methylstyrol/Acrylnitril-Copolymerisat besteht, soll der Acrylnitril-Gehalt der beiden Copolymerisate tunlichst nicht mehr als 10 Gew.-% vorzugsweise nicht mehr als 5 Gew.-%, bezogen auf das Copolymerisat, voneinander abweichen. Die Hartkomponente (D) der erfindungsgemäßen Massen kann jedoch auch nur aus einem einzigen Styrol/Acrylnitril-Copolymerisat bestehen, nämlich dann, wenn bei den Pfropmischpolymerisationen zur Herstellung der Ko,ponenten (A), (B) und (C) als auch bei der Herstellung der zusätzlcihen, separat hergestellten Hartkomponenten von dem gleichen Monomer-Gemsich aus Styrol und Acrylnitril ausgegangen wird.

Die zusätzliche, separat hergestellte Hartkomponente (D) kann nach den herkömmlichen Methoden erhalten werden. So kann beispielsweise die Copolymerisation des Styrols und/oder α-Methylstyrols mit dem Acrylnitril in Masse, Lösung, Suspension oder wäßriger Emulsion durchgeführt werden. Die Hartkomponente (D) hat vorzugsweise eine Viskositätszahl von 40 bis 100, insbesondere von 50 bis 80. Die Bestimmung der Viskositätszahl erfolgt analog DIN 53 726; dabei werden 0,5 g Material in 100 ml Dimethylformamid gelöst.

Die erfindungsgemäßen Mischungen aus den Komponenten (A), (B), (C) und (D) können als weitere Komponente (E) alle Zusatz- oder Hilfsstoffe enthalten, wie sie für die ASA-Polymerisate üblich und gebräuchlich sind. Als solche Zusatz- und/oder Hilfsstoffe seien beispielsweise genannt: Füllstoffe, weitere verträgliche Kunststoffe, Antistatika, Antioxidantien, Flammschutzmittel und Schmiermittel. die Zusatz- und Hilfsstoffe werden in üblichen und wirksamen Mengen, vorzugsweise in Mengen von 0,1 bis zu insgesamt etwa 30 Gew.-%, bezogen auf die Mischung (A + B + C), eingesetzt.

Es hat sich überraschenderweise gezeigt, daß die erfindungsgemäßen Massen trotz des relativ hohen Anteils an großteiligem Pfropfmischpolymerisats (B) eine sehr gute Einfärbbarkeit besitzen. Unter Einfärbbarkeit wird dabei die Erzielung brillanter Farbtöne mit möglichst kleinen Pigmentmengen verstanden. Die erfindungsgemäßen Massen können daher als Zusatzstoff (E) insbesondere Farbstoffe und Pigmente eingemischt enthalten. Die Farbstoffe oder Pigmente werden der Mischung üblicherweise in Mengen von etwa 0,02 bis etwa 10 Gew.-%, vorzugsweise von 0,2 bis 5 Gew.-%, bezogen auf die Mischung (A + B + C), zugesetzt. Als Farbstoffe und Pigmente kommen beispielsweise in Betracht: Cadmiumsulfid, Kupferphthalocyanin, Eisenoxide, feinteilige Ruße. Die aus diesen eingefärbten Massen hergestellten Formkörper zeichnen sich durch einen ausgezeichneten Farbeindruck aus, wobei brillante und leuchtende Farbtöne ohne jede Eintrübung oder Grauschleier erhalten werden können. die aus den gefärbten Massen durch Spritzguß hergestellten Formkörper besitzen überraschenderweise auch praktisch keine unterschiedliche Farbtönung im Bereich der Angußstelle und der Bindenaht, wie sie in unerwünschter Weise bei der Spritzgußverarbeitung von gefärbten ASA-Polymerisaten auf Basis von kleinteiligen Pfropfmischpolymerisaten der Komponente (A) ansonsten in starkem Maße zu beobachten sind. Die durch Spritzguß verarbeiteten, gefärbten erfindungsgemäßen Massen zeigen hingegen eine gute Farbegalität im Bereich der Angußmarkierung und der Bindenaht. Die Massen der Erfindung besitzen neben der guten Einfärbbarkeit im Vergleich zu den bekannten ASA-Polymerisaten auch eine stark verbesserte Kerbschlagzähigkeit. Wie die nachfolgenden Beispiele zeigen, liegt dabei die Kerbschlagzähigkeit der erfindungsgemäßen Mischungen weit über den entsprechenden Werten der Einzelkomponenten.

Die Erfindung wird durch die nachfolgenden Beispiele näher erläutert. Die in den Beispielen genannten Teile und Prozente beziehen sich, sofern nicht anders angegeben, auf das Gewicht.

Die mittlere Teilchengröße und die Teilchengrößenverteilung wurde aus der integralen Massenverteilung nach der weiter oben angegebenen Methode bestimmt. Die Ermittlung der Pfropfausbeute und somit des Anteils des Pfropfmischpolymerisats in den bei der Pfropfmischpolymerisation erhaltenen Produkt erfolgt durch Extraktion dieses Polymerisationsproduktes mit Methylethylketon bei 25°C. Der Pfropfgrad der Pfropfmischpolymerisate, d.h. der prozentuale Anteil vom im Pfropfmischpolymerisat enthaltenen gepfropften Styrol und Acrylnitril, ergibt sich am einfachsten aus der elementaranalytischen Bestimmung von Stickstoff (aus Acrylnitril) und Sauerstoff (aus Acrylester) in Methylethylketon unlöslichen Gel. Die Viskositätszahl der Hartkomponenten wurde, wie bereits beschrieben, in Dimethylformamid gemessen. Die Kerbschlagzähigkeit der Massen wurde nach DIN 53 435 an gespritzten Normkleinstäben bei 23°C und bei -40°C ermittelt. Die Spritztemperatur für die Normkleinstäbe betrug dabei 220, 250 und 280°C. Die Beurteilung der Einfärbbarkeit erfolgte visuell am eingefärbten, durch Spritzguß hergestellten Formkörpern. Zur Einfärbung der Massen wurde dabei in allen Fällen 1 % Cadmiumrot verwendet. Die Einfärbbarkeit wurde aufgrund des erhaltenen Farbeindruckes wie folgt benotet:

Note 1:   rein, brillant und klar
Note 2:   rein, beinahe brillant, fast klar
Note 3:   etwas stumpf, leicht verschleiert
Note 4:   stumpf, verschleiert
Note 5:   schmutzig und trübe, stark verschleiert.

Die multiaxiale Zähigkeit wurde bei 23°C nach DIN 53 443 an Rundscheiben gemessen, die bei 280°C gespritzt wurden.

Beispiele und Vergleichsbeispiele

A) Pfropfprodukt auf Basis eines Silikonkautschuks mit mittlerem Teilchendurchmesser ($d_{50}$) von 135 nm in der Siliconkautschuk-Grundstufe und 165 mm nach der Pfropfung mit Styrol/Acrylnitril. Die Teilchengrößenverteilung des Pfropfprodukts war eng (Q = 0,22). Herstellung wie in EP 370 344 beschrieben. Pfropfgrad: 45 %

Herstellung des feinteiligen Pfropfmischpolymerisats (B)

(b1) 16 Teile Butylacrylat und 0,4 Teile Tricyclodecenylacrylat werden in 150 Teilen Wasser unter Zusatz von einem Teil des Natriumsalzes einer $C_{12}$-$C_{16}$-Paraffinsulfonsäure, 0,3 Teilen Kaliumpersulfat, 0,3 Teilen Natriumhydrogencarbonat und 0,15 Teilen Natriumpyrophosphat unter Rühren auf 60°C erwärmt. 10 Minuten nach dem Anspringen der Polymerisationsreaktion wurden innerhalb von 3 Stunden eine Mischung 82 Teilen Butylacrylat und 1,6 Teilen Tricyclodecenylacrylat zugegeben. Nach Beendigung der Monomerzugabe wurde noch eine Stunde nachreagieren gelassen. Der erhaltene Latex des vernetzten Butylacrylat-Polymerisats hatte einen Feststoffgehalt von 40 Gew.-%. Die mittlere Teilchengröße (Gewichtsmittel) wurde zu 76 nm ermittelt. Die Teilchengrößenverteilung war eng (Quotient Q = 0,29).

(b2) 150 Teile des nach (b1) erhaltenen Polybutylacrylat-Latex wurden mit 40 Teilen einer Mischung aus Styrol und Acrylnitril (Gewichtsverhältnis 75:25) und 60 Teilen Wasser gemischt und unte Rühren nach Zusatz von weiteren 0,03 Teilen Kaliumpersulfat und 0,05 Teilen Lauroylperoxid 4 Stunden auf 65°C erhitzt. Nach Beeindigung der Pfropmischpolymerisation wurde das Polymerisatinsprodukt mittels Calciumchloridlösung bei 95°C aus der Dispersion gefällt, mit Wasser gewaschen und im warmen Luftstrom getrocknet. Der Pfropfgrad des Pfropfmischpolymerisats betrug 35 %.

Herstellung des großteiligen Pfropfmischpolymerisats (C)

(c1) Zu einer Vorlage aus 2,5 Teilen des in der Stufe (b1) dieses Beispiels hergestellten Latex wurden nach Zugabe von 50 Teilen Wasser und 0,1 Teilen Kaliumpersulfat im Verlauf von 3 Stunden enerseits eine Mischung aus 49 Teilen Butylacrylat und 1 Teil Tricyclodecenylacrylat und andererseits eine Lösung von 0,5 Teilen des Natriumsalzes einer $C_{12}$- bis $C_{18}$-Paraffinsulfonsäure in 25 Teilen Wasser bei 60°C zulaufen gelassen. Nach Zulaufende wurde 2 Stunden nachpolymerisiert. Der erhaltene latex des vernetzten Butylacrylat-Polymerisats hatte einen Feststoffgehalt von 40 %. Die mittlere Teilchengröße (Gewichtsmittel des Latex) wurde zu 288 nm ermittelt. Die Teilchengrößenverteilung war eng (Q = 0,1).

(c2) 150 Teile dieses Latex wurden mit 40 Teilen einer Mischung aus Styrol und Acrylnitril (Verhältnis 75:25) und 110 Teilen Wasser gemischt und unter Rühren nach Zusatz von weiteren 0,03 Teilen Kaliumpersulfat und 0,05 Teilen Lauroylperoxid 4 Stunden auf 65°C erhitzt. Das bei der Pfropfmischpolymerisation erhaltene Polymerisationsprodukt wurde dann mittels einer Calciumchloridlösung bei 95°C aus der Dispersion ausgefällt, abgetrennt, mit Wasser gewaschen und im warmen Luftstrom getrocknet. Der Pfropfgrad des Pfropfmischpolymerisats wurde zu 27 % ermittelt.

Herstellung der Hartkomponente D

Ein Monomeren-Gemisch aus Styrol und Acrylnitril wurde unter üblichen Bedingungen in Lösung polymerisiert. Das erhaltene Styrol/Acrylnitril-Copolymerisat hatte einen Acrylnitril-Gehalt von 35 % und eine Viskositätszahl von 80 ml/g.

Herstellung der Abmischungen

Zunächst wurden die Pfropfprodukte jedes für sich mit dem Styrol/Acrylnitril-Copolymerisat in einem Extruder bei 280°C abgemischt. Die so erhaltenen Mischungen (A + B + D) und (C + D) wurden anschließend in einem Mischextruder bei 280°C zusammengemischt. Bei der Mischung der Polymerisate wurden 1 % eines Schmiermittels (Diethylphthalat) und der Farbstoff zugesetzt. Es wurden verschiedene Mischungen hergestellt, in denen sich das Verhältnis der Pfropfgrundlagen des feinteiligen Pfropfmischpolymerisats in der in der nachfolgenden Tabelle angegebenen Weise änderte. Die Vergleichsmischungen 1 bis 5 waren dabei so eingestellt, daß die Summe der beiden Pfropfgrundlagen (B1 + B2) des feinteiligen und des großteiligen Pfropfmischpolymerisats (B) und (C) in der gesamten Mischung (A + B + C) stets 25 % betrug. Die in der nachfolgenden Tabelle zusammengestellten Eigenschaften der Mischungen wurden an den aus diesen Mischungen durch Spritzguß hergestellten Formkörpern ermittelt. Der Kautschukgehalt in den Beispielen 9 bis 11 lag unterhalb oder was identisch mit den Vergleichsversuchen 1 bis 8.

Tabelle

| | Vergleichsversuche | | | | | | | Beispiele | |
|---|---|---|---|---|---|---|---|---|---|
| | V1 | V3 | V4 | V5 | V6 | V7 | V8 | 1 | 2 |
| Komponente A | - | - | - | - | 50 | 12,5 | 10 | 10 | 15 |
| Komponente B | 50 | 37,5 | 25 | - | - | 37,5 | - | 30 | 28 |
| Komponente C | - | 12,5 | 25 | 50 | - | - | 40 | 10 | 7 |
| Komponente D | 50 | 50 | 50 | 50 | 27,5 | 50 | 50 | 50 | 50 |
| Kautschukgehalt [%] | 30 | 30 | 30 | 30 | 18 | 29,5 | 29,5 | 29,5 | 29 |
| $a_K$ (220/23) | 8 | 29 | 31 | 19 | 15 | 26 | 17 | 28 | 26 |
| $a_K$ (250/23) | 16 | 31 | 29 | 19 | 13 | 25 | 20 | 27 | 26 |
| $a_K$ (280/23) | 22 | 21 | 22 | 20 | 18 | 23 | 23 | 26 | 25 |
| $a_K$ (250/-40) | 1 | 1 | 1 | 2 | 8 | 3 | 5 | 5 | 6 |
| Einfärbbarkeit | 1 | 1 | 2 | 5 | 3 | 2 | 4 | 1 | 2 |
| Wg [J/m] (23°C) | 27 | 33 | 32 | 29 | 28 | 29 | 30 | 30 | 32 |

**Patentansprüche**

1. Thermoplastische Formmasse aus - bezogen auf die Summe aus A, B und C -

A:  5 bis 90 Gew.-% eines ersten Pfropfcopolymerisats A, das gebildet wird aus, bezogen auf A,

A1:  10 bis 70 Gew.-% einer Pfropfhülle aus mindestens 50 Gew.-% einer Vinylverbindung (außer Acrylnitril) und bis zu 50 Gew.-% Acrylnitril und

A2:  30 bis 90 Gew.-% eines teilchenförmigen Siliconkautschuks als Pfropfkern, der einen mittleren Teilchendurchmesser ($d_{50}$) von 50 bis 500 nm aufweist, und

9

B: 5 bis 90 Gew.-% eines zweiten Pfropfcopolymerisats B, das gebildet wird aus, bezogen auf B,

B1: 5 bis 75 Gew.-% einer Pfropfhülle aus mindestens 50 Gew.-% einer Vinylverbindung (außer Acrylnitril) und bis zu 50 Gew.-% Acrylnitril und

B2: 25 bis 95 Gew.-% eines teilchenförmigen Acrylatkautschuks als Pfropfgrundlage, der einen mittleren Teilchendurchmesser ($d_{50}$) von 50 bis 150 nm aufweist und

C: 5 bis 90 Gew.-% eines dritten Pfropfcopolymerisats, das gebildet wird aus, bezogen auf C,

C1: 5 bis 75 Gew.-% einer Pfropfhülle aus mindestens 50 Gew.-% einer Vinylverbindung (außer Acrylnitril) und bis zu 50 Gew.-% Acrylnitril und

C2: 25 bis 95 Gew.-% eines teilchenförmigen Acrylatkautschuks als Pfropfgrundlage, der einen mittleren Teilchendurchmesser ($d_{50}$) von 200 bis 600 nm aufweist.

2. Formmassen nach Anspruch 1, enthaltend ferner ein thermoplastisches Vinylpolymerisat mit einer Glastemperatur oberhalb von 30°C.

3. Formmasse nach Anspruch 1, enthaltend als Acrylatkautschuk ein mit Dicyclopentadienylacrylat vernetztes Polymerisat.

4. Formmasse nach Anspruch 1, enthaltend A und B in einer Menge von jeweils 20 bis 70 und C in einer Menge von 10 bis 60 Gew.-%.

# EUROPÄISCHER RECHERCHENBERICHT

**Europäisches Patentamt**

Nummer der Anmeldung

EP    92 11 5543

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,Y | EP-A-0 370 344 (BAYER AG)<br>* Ansprüche *<br>* Beispiele *<br>* Seite 4, Zeile 21 - Zeile 32 *<br>--- | 1-4 | C08L51/08<br>C08L51/04 |
| P,Y | EP-A-0 450 485 (BASF AG)<br>* Ansprüche *<br>* Beispiele *<br>* Seite 2, Zeile 50 - Zeile 56 *<br>* Seite 4, Zeile 18 - Zeile 26 *<br><br>----- | 1-4 | |
| | | | **RECHERCHIERTE SACHGEBIETE (Int. Cl.5)**<br><br>C08L |

Der vorliegende Recherchenbericht wurde für alle Patentansprüche erstellt

| Recherchenort | Abschlußdatum der Recherche | Prüfer |
|---|---|---|
| DEN HAAG | 07 JANUAR 1993 | PERSSON E.K. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes Dokument

EPO FORM 1503 03.82 (P0403)